Europäisches Patentamt

European Patent Office

Office européen des brevets

(11) Publication number: **0 163 752**
**B1**

(12) **EUROPEAN PATENT SPECIFICATION**

(45) Date of publication of patent specification: **18.01.89**

(51) Int. Cl.⁴: **C 03 B 37/018,** C 03 B 8/04,
C 03 B 19/00

(21) Application number: **84106425.6**

(22) Date of filing: **05.06.84**

(54) **A method for the preparation of a synthetic quartz glass tube.**

(43) Date of publication of application:
**11.12.85 Bulletin 85/50**

(45) Publication of the grant of the patent:
**18.01.89 Bulletin 89/03**

(84) Designated Contracting States:
**DE FR GB**

(56) References cited:
**US-A-4 165 223**
**US-A-4 233 052**
**US-A-4 402 720**

(73) Proprietor: **Shin-Etsu Chemical Co., Ltd.**
**6-1, Ohtemachi 2-chome**
**Chiyoda-ku Tokyo 100 (JP)**

(72) Inventor: **Okamoto, Haruo**
**2-14-45, Gochi**
**Joetsu-shi Niigata-ken (JP)**
Inventor: **Sawada, Katsuya**
**4-10, Sanai-cho**
**Joetsu-shi Niigata-ken (JP)**

(74) Representative: **Jaeger, Klaus, Dipl.-Chem. Dr.**
**et al**
**Jaeger, Steffens & Köster Patentanwälte**
**Pippinplatz 4a**
**D-8035 München-Gauting (DE)**

Courier Press, Leamington Spa, England.

## Description

### Background of the invention

The present invention relates to a method for the preparation of a synthetic quartz glass tube or, more particularly, to a method for the preparation of a high-quality synthetic quartz glass tube having a high precision in the inner diameter of the tube and outstandingly free from bubbles, foreign materials, striations and the like defects in the quartz glass.

Tubes of synthetic quartz glass are being manufactured industrially in several methods including a method of boring of a quartz glass block by use of a diamond drill or ultrasonic waves and a method in which a rod of a carbonaceous material is thrusted into a quartz glass block heated and softened at about 1700°C or higher followed by pulling out the carbon rod after cooling. The quartz glass tubes fabricated in these prior art methods are disadvantageous in the poor precision of the inner diameter of the tube so that finishing of the inner surface is sometimes indispensable using diamond tools. Moreover, the quartz glass tubes manufactured in these methods usually contain bubbles and foreign materials and are not free from styriations caused by the strain in the fabrication. Therefore, these prior art methods are not always suitable as a method for the preparation of a high-quality quartz glass tube.

An alternative method (US—A—3 806 570) for the preparation of a tube of synthetic quartz glass is that soot-like silica formed by the vapor-phase pyrolysis or flame hydrolysis of a volatilizable silicon compound is deposited on and around a carbon rod as a mandrel in a form of a sintered silica body which is subsequently heated and melted to vitrify and the carbon mandrel is pulled away after cooling of the thus formed quartz glass. A problem in this method is that the gas occluded in the sintered silica body is released in the course of melting and vitrification thereof to accumulate in the interface between the layer of quartz glass and the surface of the carbon mandrel so that the resultant quartz glass tube sometimes suffers bulging out in part. In addition, the accumulated gas forms numberless tiny bubbles in the layer of the inner surface of the tube so that quartz glass tubes of high quality can hardly be obtained by this method.

### Summary of the invention

An object of the present invention is therefore to provide a novel method for the preparation of a synthetic quartz glass tube of high quality free from the above described problems and disadvantages in the prior art methods.

More particularly, the object of the present invention is to provide an improvement in the method for the preparation of a synthetic quartz glass tube by the deposition of silica soot on and around a carbon mandrel to form a sintered silica body followed by vitrification thereof and pulling away of the carbon mandrel after cooling.

Thus, the method of the present invention for the preparation of a synthetic quartz glass tube comprises: depositing soot-like silica particles produced by the vapor-phase pyrolysis or flame hydrolysis of a silicon-containing compound on and around a tubular mandrel made of a carbonaceous material to form a tubular layer of sintered silica with the tubular mandrel as the core; heating and vitrifying the tubular layer of the sintered silica into a tubular quartz glass body; and pulling the tubular mandrel away from the thus formed tubular quartz glass body after cooling thereof.

### Detailed description of the preferred embodiments

As is understood from the above description, the most essential feature of the inventive method is the use of a tubular mandrel of a carbonaceous material in place of the conventional solid carbon rod used in the prior art method as a mandrel for the deposition of the silica soot. The advantageous principle of this inventive method is based on the discovery that carbonaceous materials to form the mandrel are more or less porous so that no accumulation of gases takes place in the interface between the fused quartz glass layer and the surface of the carbon mandrel by the release of the occluded gases in the sintered silica layer in the course of the vitrification since the released gas diffuses through the walls of the tubular mandrel of the carbonaceous material to be discharged out of the end opening of the tubular mandrel so that the danger of the bulging of the quartz glass tube can completely be eliminated along with the disappearance of bubbles on the inner surface of the quartz glass tube. When the tubular mandrel of the carbonaceous material has been finished to have highly accurate dimensions and good surface smoothness, the fused quartz glass tube prepared by use of a such a tubular mandrel according to the invention is also imparted with a high dimensional accuracy inside and satisfactory surface condition on the inner walls.

The deposition of soot-like silica particles on and around a tubular mandrel of a carbonaceous material is performed according to a known process of the so-called chemical vapor deposition (CVD) method. That is, a volatilizable silicon-containing compound, such as silicon tetrachloride, trichlorosilane, methyl trichlorosilane, silane, methyl trimethoxysilane, silicon tetramethoxide and the like, in a gaseous or vapor form is introduced into a reaction chamber together with oxygen and, optionally, an inert gas, e.g. nitrogen and argon, and burnt our flame-hydrolyzed in an oxyhydrogen flame to produce soot-like fine particles of silica or so-called silica soot to be deposited on and around the mandrel.

It is of course optional that the refractive index of the resultant fused quartz glass tube is modified, as in the technology of optical fibers, by admixing the starting silicon-containing compound with a known dopant according to desire such as the compounds of germanium, boron, phosphorus and fluorine exemplified by germanium tetrachloride, germanium tetramethoxide, boron trichloride, boron trimethoxide and certain fluorine-substituted hydrocarbon compounds. In particular, the use of a fluorine-substituted hydrocarbon compound represented by the general formula $C_pH_qCl_rF_x$, in which p and x are each a positive integer and q and r are each zero or a positive integer with the proviso that

$$2p+2=q+r+x,$$

and exemplified by difluoro dichloro methane, difluoro chloro methane, trifluoromethane, carbon tetrafluoride and the like, is advantageous as a refractive index modifier since an additional advantage is obtained thereby in the greatly decreased content of hydroxyl groups in the resultant quartz glass.

In the next place, the tubular mandrel is made of a carbonaceous material which may be graphitized or ungraphitized. In view of the direct contacting of the fused glass tube with the surface of the mandrel, the carbonaceous material should be carbon having a purity as high as possible.

Since the tubular mandrel of the carbonaceous material serves to provide an escape to the gas released from the sintered silica layer in the course of vitrification thereof and otherwise accumulated in the interface between the silica layer and the surface of the mandrel, as is mentioned above, the wall thickness of the tubular mandrel should be as small as possible. In this regard, the inner diameter of the tubular mandrel should preferably be at least a half of the outer diameter. It is, however, of course that the inner diameter of the tubular mandrel is under a limitation by the requirement that the tubular mandrel should have a sufficient mechanical strength.

Furthermore, the porosity of the carbonaceous material forming the tubular mandrel is also of importance in order to facilitate escape of the gas by diffusion therethrough and the preferable porosity of the material is in the range from 0.15 to 0.30. When the porosity of the carbonaceous material is smaller than 0.15, the material is so dense that the velocity of gas diffusion therethrough is not sufficiently high and the danger of gas accumulation cannot be completely eliminated. On the other hand, a carbonaceous material having a porosity in excess of 0.30 is undesirable due to the poor mechanical strength. It should be noted that the porosity should be microscopically fine and no pits or depressions of a relatively large size should be found at least on the outer surface of the tubular mandrel since the use of such a tubular mandrel having a rough outer surface may result in a roughened inner surface of the quartz glass tube prepared therewith due to the intrusion of the molten quartz glass in the course of the vitrification of the sintered silica layer.

The tubular mandrel of the carbonaceous material should have a high dimensional accuracy outside in order to faciliate the procedure of pulling the mandrel away from the tubular body of the quartz glass formed by the vitrification of the sintered silica therearound after cooling. When the tubular mandrel has a sufficiently uniform outer diameter, there is usually no problem in this procedure since the considerably large difference between the thermal expansion coefficients of the fused quartz glass and the carbonaceous material, the values of the former and the latter being about $5\times10^{-7}/^\circ C$ and about $5\times10^{-6}/^\circ C$, respectively, and the larger shrinkage of the manderel than the quartz glass tube by cooling produces a clearance therebetween by virtue of which the tubular mandrel can readily be pulled away from the quartz glass tube. In this regard, the maximum deviation in the outer diameter of the tubular mandrel should not exceed 0.5% of the average outer diameter thereof since a tubular mandrel having a larger deviation in the outer diameter cannot be pulled away without difficulty. Furthermore, the central line mean roughness of the surface $R_a$ of the tubular mandrel should preferably be 10 μm or smaller since the smoothness of the inner surface of the quartz glass tube largely depends on the smoothness of the surface of the tubular mandrel.

In practicing the method of the present invention, the tubular mandrel of the carbonaceous material is held horizontally and rotated at a constant velocity around its own axis by a suitable driving means and the gas or vapor of the volatilizable silicon-containing compound admixed with oxygen and other suitable carrier gas is blown through an oxyhydrogen flame burner at the rotating mandrel so that the silica soot produced by the combustion or pyrolysis of the silicon-containing compound is deposited on the surface of the mandrel. The tubular mandrel is reciprocatingly moved back and forth in the axial direction along with the axial rotation so that the deposition of the silica soot proceeds to form a tubular layer having a uniform thickness around the mandrel over an axial length. It is of course optional that, in place of the reciprocating movement of the tubular mandrel in the axial direction, the burner is reciprocatingly moved in parallel to the axis of the mandrel to provide a relative movement therebetween.

The silica soot on the mandrel is sintered as it is deposited by being heated with the oxyhydrogen flame to form a layer of sintered silica. The degree of sintering should be controlled in such a manner that the sintered layer of silica on the mandrel has a bulk density in the range from 0.4 to 1.0 g/cm³ by adequately controlling the intensity of the oxyhydrogen flame. When the bulk density is too small, the layer of the sintered silica may sometimes be cracked in parallel to the axis of the mandrel during the silica soot deposition or in the course of cooling following completion of the growth of the sintered silica layer. It is noted that the increase in the diameter of the sintered silica layer under growing results in a gradual decrease of the temperature on the surface thereof so that the sintered silica layer incrementally deposited on the surface may have a decreasing bulk density. Such a decrease in the bulk density of the sintered silica layer can be compensated either by decreasing the rotational velocity of the tubular mandrel or increasing the fuel gas supply to increase the calorific value of the flame accordingly in order to obtain a uniform bulk density throughout the sintered silica layer. Meanwhile, the intensity of oxyhydrogen flame depends to some extent on the type of the burner and a higher bulk density of the sintered silica layer is obtained by use of a more efficient oxyhydrogen flame burner. The material of the burner is preferably fused quartz glass from the standpoint of workability, corrosion resistance and little chance of impurity intermixing.

The tubular sintered silica body on the tubular mandrel of the carbonaceous material is then subjected to vitrification by heating in a furnace into fused quartz glass. The procedure of vitrification may be performed either for the whole body of the sintered silica layer at one time or in a zone-wise manner starting from one end of the sintered silica layer to the other depending on the type of the furnace used therefore. At any rate, the sintered silica body is melted and vitrified into a transparent quartz glass body with shrinkage in the volume and release of the occluded gas. The released gas is, different from conventional procedures, never accumulated in the interface between the thus formed quartz glass body and the surface of the mandrel so that deformation of the quartz glass tube by partial bulging under the gaseous pressure can be obviated along with the advantage that the inner surface of the quartz glass tube is very smooth without bubbles. The temperature at which this vitrification is performed should preferably be in the range from 1400 to 1700°C although it is adequately selected in consideration of the bulk density of the sintered silica body, content of the doping agent and other parameters. The vitrification should be performed in a non-oxidizing atmosphere in the furnace by replacing the air inside the furnace with an inert gas such as argon and helium under atmospheric pressure or under reduced pressure or in vacuum.

The synthetic quartz glass tube prepared by the inventive method described above has a high dimensional accuracy and high purity so that the product is useful as a base material for the preparation of optical fibers by the MCVD method and as a material for a diffusion tube used in the processing of semiconductor devices as well as for the fabrication of various kinds of scientific instruments and tools.

In the following, the method of the present invention is described in more detail by way of examples.

Example 1

A carbon tube having a length of 800 mm, inner diameter of 20 mm and outer diameter of 30 mm with a maximum deviation of ±0.1 mm from the average value was held horizontally and rotated around its own axis. Vapor of silicon tetrachloride was supplied and flame-hydrolyzed at a rate of 750 g/hour in an oxyhydrogen flame together with hydrogen and oxygen supplied and burnt at rates of 22 Nm³/hour and 10 Nm³/hour, respectively, and the silica soot thus produced in the flame was deposited on the surface of the rotating carbon tube as a mandrel which was moved in the axial direction reciprocatingly back and forth so that the deposition of the silica soot on the mandrel took place over a length of about 500 mm in an approximately uniform thickness. After 10 hours of running in this manner, a porous sintered silica layer weighing 1140 g was formed on and around the mandrel. The bulk density of the thus formed sintered silica layer was 0.65 g/cm³ on an average.

The thus formed sintered silica body supported on the carbon mandrel was then put into an electric furnace and heated at 1650°C in an atmosphere of helium under a pressure of 0.5 atmosphere to be converted into a vitrified quartz glass. After cooling, the carbon mandrel could readily be pulled away from the quartz glass which had a weight of 1138 g, length of 450 mm, outer diameter of 48.7 mm and inner diameter of 30.1 mm. The dimensional accuracy of the inner diameter of the tube was as good as that of the outer diameter of the tubular carbon mandrel with a maximum deviation of 0.1 mm.

Example 2

A graphite tube having a length of 800 mm, inner diameter of 20 mm and outer diameter of 30 mm with a maximum deviation of ±0.1 mm from the average value of the outer diameter was used as the mandrel and deposition of silica soot thereon was performed under substantially the same conditions as in Example 1 to form a porous sintered silica layer on and around the mandrel over a length of about 500 mm in an approximately uniform thickness. The thus formed sintered silica body had a weight of 1155 g and a bulk density of 0.66 g/cm³ on an average.

The sintered silica body supported on the graphite mandrel was heated and vitrified in an electric furnace in an atmosphere of helium gas under a pressure of 0.9 atmosphere. After cooling, the graphite mandrel could readily be pulled away from the thus formed fused quartz glass tube which had a weight of 1150 g, length of 430 mm, outer diameter of 49.5 mm and inner diameter of 30.0 mm. The maximum deviation of the inner diameter from the average value was 0.1 mm.

Example 3

The procedure for the deposition of silica soot was substantially the same as in Example 1 except that the tubular mandrel was made of graphite and had a length of 1000 mm, inner diameter of 40 mm and outer diameter of 60 mm having a maximum deviation of ±0.2 mm from the average value thereof and the gaseous feeds to the oxyhydrogen flame burner were methyl trimethoxysilane vapor, hydrogen and oxygen at rates of 2130 g/hour, 5.2 Nm$^3$/hour and 2.6 Nm$^3$/hour, respectively. After 10 hours of running in this manner, a porous sintered silica layer having an approximately uniform thickness was formed on and around the tubular graphite mandrel over a length of about 800 mm. The thus formed porous sintered silica body had a weight of 4250 g and a bulk density of 0.72 g/cm$^3$ on an average.

The sintered silica body supported on the graphite mandrel was subjected to zone-wise melting and vitrification by transferring through a zone-heating type electric furnace at a velocity of 5 mm/minute and rotation of 10 rpm. After cooling, the tubular graphite mandrel could readily be pulled away from the thus formed fused quartz glass tube which had a weight of 4180 g, length of 740 mm, outer diameter of 83.0 mm and inner diameter of 60.1 mm. The quartz glass tube had no defects of bulge-out and bubble inclusion and the dimensional accuracy on the inner surface thereof was satisfactory with a maximum deviation from the average value of ±0.2 mm.

Comparative Example 1
The same experimental procedure as in Example 1 was repeated except that the tubular carbon mandrel was replaced with a solid carbon rod having a length of 800 mm and outer diameter of 30 mm with a maximum deviation from the average value of ±0.1 mm to form a porous sintered silica body having a weight of 1170 g.

The sintered silica body was vitrified in the same manner as in Example 1 and, after cooling, the carbon mandrel was pulled away from the thus obtained quartz glass tube having a weight of 1165 g. This quartz glass tube, however, has a large bulge-out on the center portion and numberless tiny bubbles were included in the inner surface layer so that the appearance of the tube was milky white.

Comparative Example 2
The same experimental procedure as in Example 3 was repeated except that the tubular graphite mandrel was replaced with a solid graphite rod having the same dimensions and the same dimensional accuracy in the outer diameter to form a porous sintered silica body having an average bulk density of 0.73 g/cm$^3$ on and around the graphite mandrel.

The sintered silica body thus formed was heated and vitrified in an electric furnace and, after cooling, the graphite mandrel was pulled away frmm the quartz glass tube which, however, had a bulge-out and inclusion of numberless bubbles over the whole inner surface presenting milky white appearance.

Example 4
The procedure for the deposition of silica soot on and around the tubular graphite mandrel was substantially the same as in Example 3 except that the feed to the oxyhydrogen flame burner was further admixed with difluoro dichloromethane gas at an equal molar rate to the feed rate of the methyl trimethoxysilane vapor, i.e. 15.66 moles/hour or 1895 g/hour. The porous sintered silica layer formed by the deposition of the silica soot on and around the tubular graphite mandrel over a length of 800 mm had a weight of 1890 g and an average bulk density of 0.60 g/cm$^3$.

The porous sintered body of silica supported on the mandrel was heated and vitrified in the same manner as in Example 3 and, after cooling, the tubular graphite mandrel was pulled away from the thus formed fused quartz glass tube which had a weight of 1875 g, length of 730 mm, outer diameter of 71.3 mm and inner diameter of 60.1 mm and was absolutely free from any bulge-out and inclusion of bubbles. The dimensional accuracy of the inner surface was satisfactory with a maximum deviation from the average value of 0.2 mm, the same as in the outer diameter of the tubular graphite mandrel. The transparency of the quartz glass tube was perfect with a refractive index of $n_D$ of 1.45118 and the quartz glass was substantially free from hydroxyl groups.

Claims

1. A method for the preparation of a synthetic quartz glass tube which comprises the steps of:
depositing soot-like silica particles produced by the vapor-phase pyrolysis or flame hydrolysis of a silicon-containing compound on and around a tubular mandrel made of a carbonaceous material to form a porous tubular layer of sintered silica with the tubular mandrel as the core;
heating and vitrifying the porous tubular layer of the sintered silica into a tubular fused quartz glass body; and
pulling the tubular mandrel away from the thus formed tubular fused quartz glass body after cooling thereof.

2. The method as claimed in claim 1 wherein the tubular mandrel has an inner diameter equal to or larger than a half of the outer diameter thereof.

3. The method as claimed in claim 1 wherein the tubular mandrel of a carbonaceous material has a porosity in the range from 0.15 to 0.30.

4. The method as claimed in claim 1 wherein the porous tubular layer of the sintered silica has a bulk density in the range from 0.4 to 1.0 g/cm$^3$.

Patentansprüche

1. Verfahren zum Herstellen eines Rohres aus synthetischem Quarzglas mit folgenden Schritten:
Ablagerung rußartiger Silica-Teilchen, die durch Dampfphasenpyrolyse oder Flammenhydrolyse aus einer siliciumhaltigen Verbindung hergestellt wurden, auf einem und um einen aus kohlenstoffhaltigem Material bestehenden röhrenförmigen Dorn herum, wobei sich eine poröse röhrenförmige Schicht gesinterten Silicas auf dem röhrenförmigen Dorn als Kern bildet;

Erhitzen und Verglasn der porösen röhrenförmigen Schicht des gesinterten Silicas zu einem röhrenförmigen geschmolzenen Quarzglaskörper; und

Herausziehen des röhrenförmigen Dorns aus dem so gebildeten röhrenförmigen geschmolzenen Quarzglaskörper nach dessen Abkühlen.

2. Verfahren nach Anspruch 1, worin der röhrenförmige Dorn einen Innendurchmesser aufweist, der gleich der oder größer als die Hälfte des Außendurchmessers des Dorns ist.

3. Verfahren nach Anspruch 1, worin der aus kohlenstoffhaltigem Material bestehende röhrenförmige Dorn eine Porosität im Bereich von 0,15 bis 0,30 aufweist.

4. Verfahren nach Anspruch 1, worin die poröse röhrenförmige gesinerte Silicaschicht eine Rohdichte im Bereich von 0,4 bis 1,0 g/cm$^3$ aufweist.

## Revendications

1. Procédé de fabrication d'un tube en verre de quartz synthétique qui comprend les étapes consistant à:

—déposer des particules de silice ayant une consistence analogue à celle de la suie et obtenues par pyrolise en phase vapeur ou par hydrolyse à la flamme d'un composé contenant du silicium sur et autour d'un mandrin tubulaire constitué par un matériau carbonacé de manière à réaliser une couche tubulaire poreuse de silice frittée sur le mandrin tubulaire faisant fonction de noyau.

—chauffer et vitrifier la couche tubulaire poreuse de silice frittée pour la transformer en un corps tubulaire en verre de quartz fondu et

—enlever le mandrin tubulaire du corps tubulaire de verre de quartz fondu après son refroidissement.

2. Procédé selon la revendication 1, selon lequel la mandrin tubulaire a un diamètre intérieur égal ou supérieur à la moitié de son diamètre extérieur.

3. Procédé selon la revendication 1, selon lequel le mandrin tubulaire en matériau carbonacé a une porosité de l'ordre de 0,15 à 0,30.

4. Procédé selon la revendication 1, selon lequel la couche tubulaire poreuse de silice frittée a une densité apparente de l'ordre de 0,4 à 1,0 g/cm$^3$.